# EUROPÄISCHE PATENTSCHRIFT

(11) **EP 2 003 011 B1**
(45) Veröffentlichungstag und Bekanntmachung des Hinweises auf die Patenterteilung: **24.08.2016**
(21) Anmeldenummer: 08001471.5
(22) Anmeldetag: 26.01.2008
(51) Int. Cl.: B60N 2/02, B60N 2/06, F16L 3/04

(54) **Schienenverstellsystem für einen Kraftfahrzeugsitz**
Rail adjustment system for a motor vehicle seat
Système de réglage de rails pour un siège de véhicule automobile

(30) Priorität: 14.06.2007 DE 102007027322
(43) Veröffentlichungstag der Anmeldung: 17.12.2008
(73) Patentinhaber: Brose Fahrzeugteile GmbH & Co. Kommanditgesellschaft, Coburg, Max-Brose-Straße 1 96450 Coburg (DE)
(72) Erfinder: Kostin, Sergej, 96450 Coburg (DE)
(74) Vertreter: FDST Patentanwälte

(56) Entgegenhaltungen:
- WO-A1-2009/074760
- FR-A1- 2 883 810
- US-A- 5 791 622

## Beschreibung

Die Erfindung betrifft ein Schienenverstellsystem für einen Kraftfahrzeugsitz mit den Merkmalen des Oberbegriffs von Anspruch 1.

Ein aus der DE 198 15 283 C2 bekanntes Schienenverstellsystem umfasst einen Antriebsmotor, der zentral zwischen zwei Schienen eines Sitzschienenpaares an einer mit deren Oberschienen verbundenen Halteplatte befestigt ist. Der Antriebsmotor ist beidseitig über Antriebswellen, die auch als flexible Wellen ausgeführt sein können, mit einer in einem Spindelgetriebe gelagerten Spindelmutter gekoppelt. Diese wirkt mit einer zwischen einer in Längsrichtung verschiebbaren Oberschiene und einer orts- oder bodenfesten Unterschiene angeordneten Gewindespindel zur Schienenlängsverstellung zusammen. Eine Drehbewegung des Antriebsmotors wird somit über die Antriebswellen und die Spindelgetriebe in eine Längsverschiebung der jeweiligen Oberschiene gegen die entsprechende Unterschiene des Schienenpaares umgesetzt.

Die flexible Antriebswelle, die eine rotierende flexible Seele und ein dieses umschließendes ebenfalls flexibles Hüllrohr aufweist, kann zu deren Lagestabilisierung in einem zusätzlichen Rohr geführt sein. Alternativ kann die flexible Welle auch dadurch stabilisiert werden, dass gemäß der DE 102 00 985 B4 in das flexible Hüllrohr zwischen dessen Enden Stützstellen für die rotierende Seele integriert sind.

In der FR 2 883 810 A1 wird insbesondere ein Schienenverstellsystem der eingangs genannten Art vorgeschlagen, wobei die die flexible Antriebswelle führenden Stützelemente als aus dem Halteelement ausgestellte Klemmlaschen ausgebildet sind. In einer Ausführungsvariante ergibt sich im Halteelement durch das Ausstellen der Klemmlaschen bedingt auf der jeweils gegenüberliegenden Seite einer Klemmlasche eine Stützlücke. In einer anderen Ausführungsvariante sind die ausgestellten Klemmlaschen jeweils gegenüberliegend angeordnet.

Während die Bereitstellung eines zusätzlichen Stützrohres für die flexible Antriebswelle einen erhöhten Teileaufwand bedeutet, ist eine flexible Antriebswelle, deren flexibles Hüllrohr mit Stützstellen für die rotierende Seele versehen ist, fertigungstechnisch aufwändig. Zudem neigen Schienenverstellsysteme, deren Spindelantriebe mit derartigen Antriebswellen ausgerüstet sind, zu unerwünschten Geräuschentwicklungen.

Der Erfindung liegt die Aufgabe zugrunde, ein verbessertes Schienenverstellsystem der eingangs genannten Art anzugeben. Insbesondere soll eine geeignete Führung einer flexiblen Antriebswelle bei gleichzeitig möglichst geringer Geräuschentwicklung bereitgestellt werden.

Diese Aufgabe wird erfindungsgemäß durch die Merkmale des Anspruchs 1 gelöst. Dazu ist in das zwischen den Schienen des Schienenpaares verlaufende Halteelement ein Führungs- und/oder Aufnahmekanal für die Antriebswelle integriert. Der Führungskanal weist eine Anzahl von Stützelementen und Stützlücken auf und ist von einer ersten Stützreihe sowie einer zweiten Stützreihe begrenzt, wobei die beiden Stützreihen einander beabstandet gegenüberliegen. Der Abstand entspricht dabei mindestens dem Außendurchmesser der flexiblen Antriebswelle. Liegen sich die beiden Stützreihen - bezogen auf das übliche Fahrzeugkoordinatensystem - in z-Richtung einander gegenüber, so ist der Führungskanal vorzugsweise durch zwei wiederum im Abstand mindestens des Außendurchmessers der Antriebswelle in x-Richtung (Schienen- bzw. Fahrzeuglängsrichtung) einander gegenüberliegenden Seitenwänden begrenzt.

Die beiden Stützreihen weisen jeweils alternierend hintereinander angeordnete Stützelemente und Stützlücken auf. Dabei überspannt das oder jedes Stützelement eine gegenüberliegende Stützlücke zumindest teilweise. Insbesondere sind die Stützreihen derart gegeneinander versetzt, dass jeweils ein Stützelement eine gegenüberliegender Stützlücke zumindest teilweise, zweckmäßigerweise jedoch vollständig überspannt.

Die Stützelemente sind geeigneterweise als stegartige Strukturabschnitte des Halteelementes ausgebildet. An das oder jedes Stützelemente ist eine lokale Stützstelle angeformt. Die jeweilige Position der einzelnen Stützstellen am entsprechenden Stützelement sind derart gewählt, das innerhalb der beiden Stützreihen jeweils zwei Stützstellen einander schräg gegenüberliegend angeordnet sind.

Das Halteelement ist daher zweckmäßigerweise aus Kunststoff und vorzugsweise als Spritzgussteil gefertigt. Das Halteelement weist hierbei geeigneterweise eine den Führungskanal beidseitig flankierende Gitterstruktur auf. Auf diese Weise kann Material sparend ein stabiles, biege- und verwindungssteifes Halteelement gefertigt werden. Beidendseitige Haltelaschen des Halteelementes ermöglichen deren Befestigung an den einander beabstandet gegenüberliegenden Schienen, insbesondere an deren Oberschienen.

Das Halteelement weist zweckmäßigerweise eine Ausnehmung auf, in der der Elektromotor oder Antriebsmotor des nachfolgend auch als Antriebssystem bezeichneten Spindelantriebs einliegt und dort befestigt werden kann. Die Ausnehmung ist dabei unter Bildung eines vergleichsweise langen Trägerabschnitts und eines vergleichsweise kurzen Trägerabschnitts in das Halteelement eingebracht, wobei sich der Führungskanal innerhalb des vergleichsweise langen Trägerabschnitts erstreckt.

Die mit der Erfindung erzielten Vorteile bestehen insbesondere darin, dass durch die Anordnung einer drehsteifen, jedoch ansonsten flexiblen Antriebswelle in einem Führungskanal eines zwischen den Schienen eines Schienenpaares eines Kraftfahrzeugsitzes angeordneten Halteelementes oder Trägerteils in einfacher Art und Weise eine zuverlässige Führung und Lagerung der Antriebswelle sichergestellt ist. Zudem sind mit einem solchen Antriebssystem, insbesondere einem Spindelantrieb, verbundene Geräuschentwicklungen vermieden oder zumindest erheblich reduziert. Dies ist hinsichtlich des Komforts von erheblicher Bedeutung, zumal das Antriebssystem üblicherweise relativ nah zur Benutzerperson unter dem entsprechenden Fahrzeugsitz und dort unter der Sitzfläche positioniert ist.

Infolge der bevorzugt dezentralen Anordnung des Elektromotors des Spindelantriebs wird der vergleichsweise lange Antriebsweg vom Spindelantrieb zu der entfernt gelegenen Schiene von der flexiblen Antriebswelle überbrückt und dabei die Antriebskraft des Spindelantriebs zuverlässig auf die entsprechende Gewindespindel übertragen. Die Antriebskraft auf die dem Elektromotor nahe gelegene Schiene wird dann über einen vergleichsweise kurzen Antriebsweg auf die dortige Gewindespindel übertragen. Hierfür ist ein kurzer Wellenzapfen geeigneterweise ausreichend.

Die Ausbildung des Führungskanals innerhalb des Halteelementes in Form von gegeneinander versetzten Stützreihen alternierend hintereinander angeordneter, zweckmäßigerweise stegartiger Stützelemente und Stützlücken, die geeigneterweise in ein als Kunststoffstrukturteil ausgebildetes Halteelement eingeformt sind, sind eine besonders zuverlässige integrierte Motor- und Wellenlagerung sowie Wellenführung bereitgestellt. Dies ermöglicht insbesondere bei der Erstmontage sowie auch zu Reparaturzwecken ein montagetechnisch einfaches Ein- und Ausfädeln der flexiblen Antriebswelle in den als Stützstruktur ausgebildeten Führungskanal bzw. aus diesem heraus.

Die Stütz- und Führungsstruktur innerhalb des Halteelementes für die flexible Antriebswelle ist praktisch punktweise realisierbar, d.h. die flexible Antriebswelle wird entlang des Führungskanals auf gegenüberliegenden Seiten im Bereich der Stützelemente an mehreren lokalen Stellen unterstützt. Die hierzu geeigneterweise an die Stützelemente angeformten Stützstellen in Form domartiger Erhebungen sind vorzugsweise derart positioniert, dass sich diese erhabenen Stützstrukturen jeweils paarweise gegenüberliegen und dabei räumlich möglichst nahe zueinander angeordnet sind.

Die dadurch gebildete rasterartige und demzufolge punktuelle Stützstruktur des entsprechend ausgeformten Stütz- oder Führungskanals für die flexible Antriebswelle ermöglicht somit deren besonders einfache Montage in diesen speziell ausgestalteten Führungskanal. Aufgrund der geeigneten Lagestabilisierung der Antriebswelle wird die Entwicklung von Schwingungsgeräuschen zuverlässig unterbunden.

Nachfolgend wird ein Auführungsbeispiel der Erfindung anhand einer Zeichnung näher erläutert. Darin zeigen:
- Fig. 1: in perspektivischer Darstellung ein Schienenpaar mit daran befestigtem Halteelement mit eingelagertem Antriebsmotor und eingeformtem Führungskanal für eine flexible Antriebswelle,
- Fig. 2: das Schienenverstellsystem gemäß Fig. 1 ohne Antriebsmotor,
- Fig. 3: einen Ausschnitt III aus Fig. 1 in größerem Maßstab mit strukturiertem Führungskanal,
- Fig. 4: den strukturierten Führungskanal in einem Längsschnitt entlang der Linie IV-IV in Fig. 3, und
- Fig. 5: in einer Explosionsdarstellung den Spindelantrieb einer der Schienen mit einer Gewindespindel und einem über die flexible Antriebswelle mit dem Elektromotor koppelbaren Spindelgetriebe.

Einander entsprechende Teile sind in allen Figuren mit den gleichen Bezugszeichen versehen.

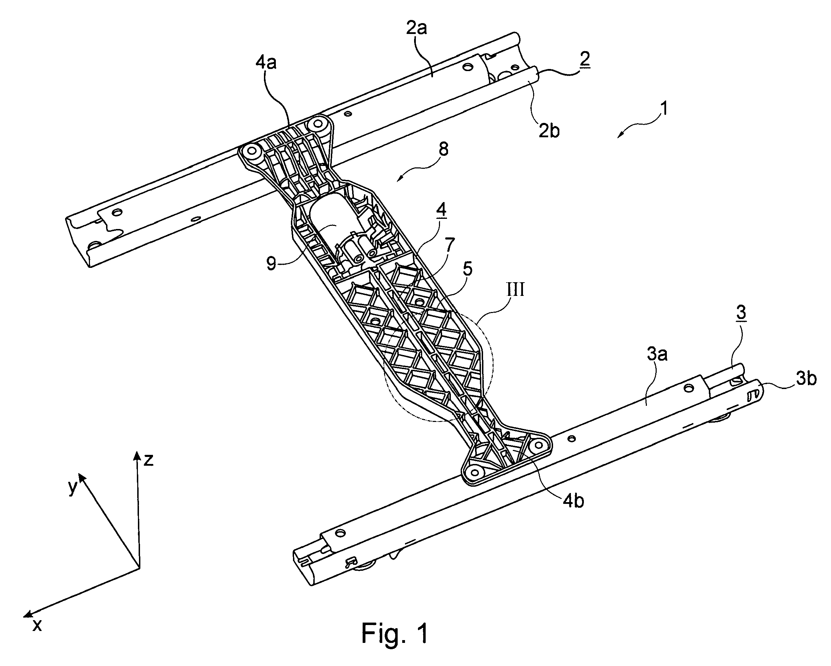

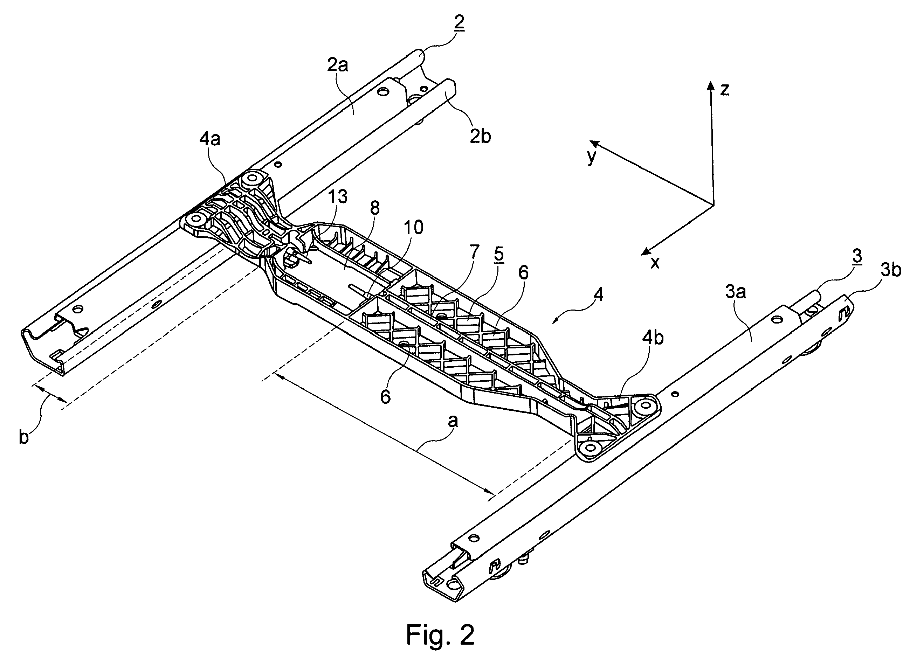

Die Figuren 1 und 2 zeigen ein Schienenverstellsystem 1 für einen Kraftfahrzeugsitz mit einem Schienenpaar, deren einander beabstandet gegenüberliegenden und zueinander parallel verlaufenden Schienen 2, 3 jeweils eine Oberschiene 2a, 3a und eine Unterschiene 2b bzw. 3b umfassen. Mit den Oberschienen 2a, 3a ist ein nachfolgend als Halteelement 4 bezeichnetes Trägerteil verbunden.

Bezogen auf ein Fahrzeugkoordinatensystem sind die Oberschienen 2a, 3a gegenüber den fahrzeugbodenfesten Unterschienen 2b bzw. 3b in x-Richtung längsverschiebbar. Das Halteelement 4 erstreckt sich somit in y-Richtung, d. h. quer zu den Schienen 2, 3. Auf den Oberschienen 2a, 3a wird ein (nicht dargestellter) Fahrzeugsitz bzw. ein entsprechendes Sitzgestell befestigt.

Das Halteelement 4 ist ein Spritzgussteil aus Kunststoff. Es weist beidendseitig Haltelaschen 4a, 4b auf, mittels denen das Halteelement 4 mit den Schienen 2, 3 und dort mit den Oberschienen 2a bzw. 3a verbunden, beispielsweise verschraubt oder vernietet ist. Das Halteelement 4 weist insbesondere in einem vergleichsweise langen Trägerabschnitt a eine nachfolgend als Gitterstruktur bezeichnete gitterartige Stützstruktur 5 mit einer Vielzahl von quadratisch oder rautenförmig angeordneten Gitterstegen 6 auf.

Innerhalb dieser Gitterstruktur 5 des Trägerabschnitts a ist ein Führungskanal 7 vorgesehen. Dabei flankiert die Gitterstruktur 5 den Führungskanal 7 beidseitig und vorzugsweise symmetrisch. Der Führungskanal 7 erstreckt sich ausgehend von einer dezentralen Ausnehmung 8 - die aus Fig. 2 vergleichsweise deutlich ersichtlich ist - entlang des Trägerabschnitts a bis zur entfernt gelegenen, in den Darstellungen nach den Fig. 1 und 2 vorderen Schiene 3. Ein vergleichsweise kurzer Trägerabschnitt b erstreckt sich auf der gegenüberliegenden Seite wiederum ausgehend von der Ausnehmung 8 bis hin zu der dieser nächstgelegenen, in der Darstellung oberen Schiene 2. Die Ausnehmung dient zur Aufnahme und Fixierung eines Elektromotors 9 eines als Spindelantrieb ausgeführten Antriebssystems.

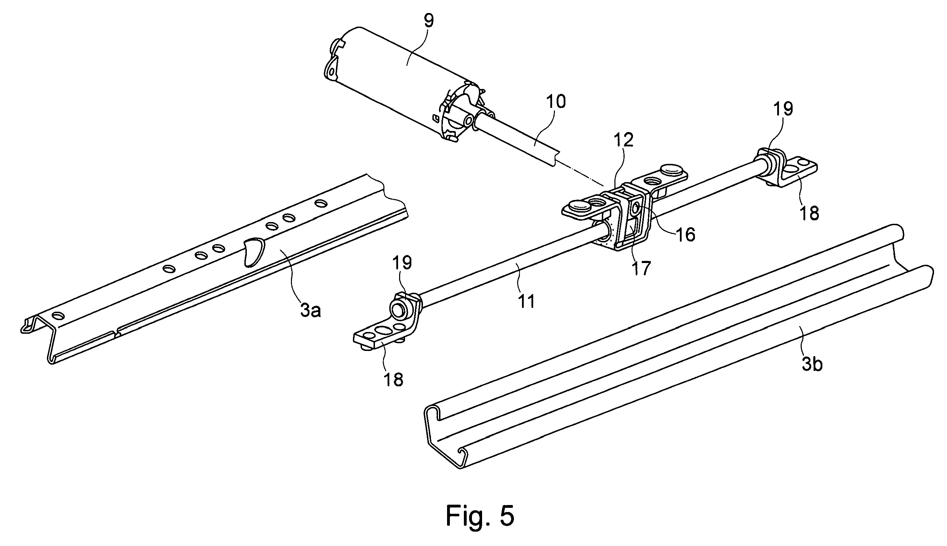

Die Antriebskraft des Elektromotors 9 wird einerseits über eine flexible Antriebswelle 10 auf die dem Elektromotor 9 fern liegende Schiene 3 und dort an eine Gewindespindel 11 übertragen (Fig. 5). Gemäß Fig. 5 wird die Drehbewegung des Antriebmotors 9 somit über die flexible Antriebswelle 10 auf ein Spindelgetriebe 12 und von dort auf die Gewindespindel 11 übertragen, wodurch die Längsverstellung der Oberschiene 3a gegenüber der Unterschiene 3b bewirkt wird. Die flexible Antriebswelle 10 ist dabei innerhalb des Führungskanals 7 des Halteelementes 4 angeordnet.

Andererseits wird die Antriebskraft des Elektromotors 9 über einen sich entlang des vergleichsweise kurzen Trägerabschnitts b verlaufenden Wellenzapfen 13 (Fig. 2) in die Schiene 2 und dort wiederum auf eine Gewindespindel übertragen.

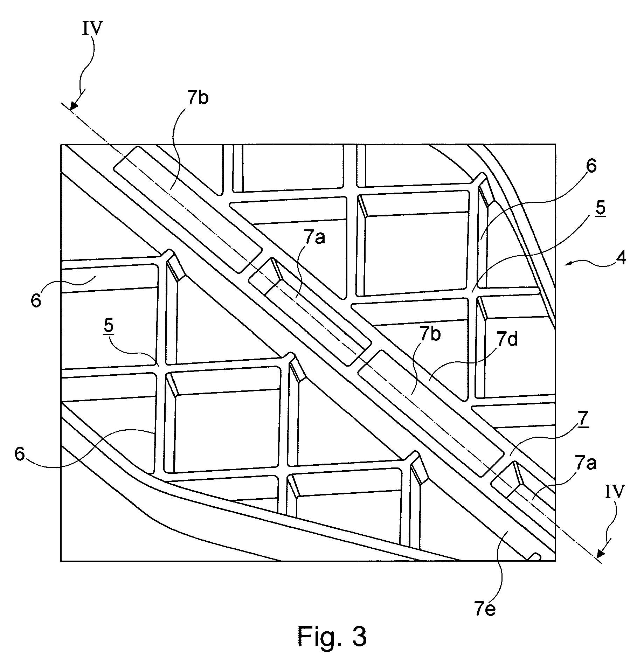

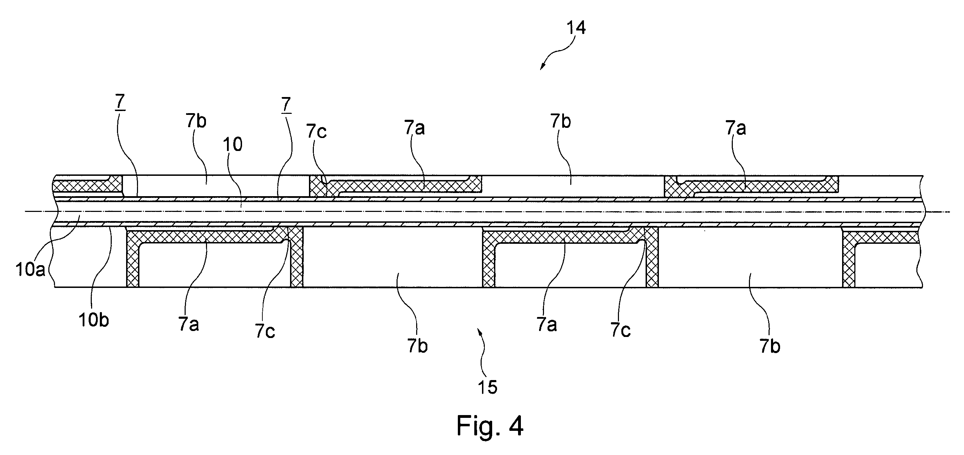

Die Fig. 3 und 4 zeigen den Führungskanal 7 für die flexible Antriebswelle 10 in größerem Maßstab. So ist dieser Führungskanal 7 durch deckelartig eingezogene, stegartige Stützstrukturen oder -elemente 7a einerseits und fensterartig ausgenommene Stützlücken 7b andererseits gebildet. Dabei sind einander in z-Richtung gegenüberliegende ober- und unterseitige Stützreihen 14 bzw. 15 mit alternierend in y-Richtung hintereinander angeordneten Stützelementen 7a und Stützlücken 7b gebildet. Die erste Stützreihe 14 und die zweite Stützreihe 15 sind zueinander versetzt angeordnet. Dadurch steht einem Stützelement 7a der einen Stützreihe 14, 15 eine Stützlücke 7b der anderen Stützreihe 15 bzw. 14 gegenüber. Die stegartigen Stützelemente 7a überspannen zumindest annähernd vollständig die jeweils gegenüberliegende Stützlücke 7b. An den stegartigen Stützelementen 13a sind domartige Erhebung angeformt, die lokale Stützstellen 7c bilden.

Wie aus Fig. 3 vergleichsweise deutlich ersichtlich ist, ist der Führungskanal 7 seitlich durch einander in x-Richtung beabstandet gegenüberliegende Seitenwände 7d und 7e begrenzt, die sich ebenfalls entlang des vergleichsweise langen Teilabschnittes a des Halteelementes 4 erstrecken. Insgesamt ist dabei die lichte Weite des Führungskanal 7 an die Dicke der flexiblen Antriebswelle 10 angepasst, d.h. die lichte Weite des Führungskanals ist geringfügig größer oder gleich dem Außendurchmesser der Antriebswelle 10.

Wie aus Fig. 4 vergleichsweise deutlich ersichtlich ist, ist die flexible Antriebswelle 10 an diesen Stützstellen 7c punkt- oder linienförmig abgestützt. Dabei stehen sich gegenüberliegende Stützstellen 7c der jeweiligen Stützelemente 7a in y-Richtung geringfügig zueinander versetzt gegenüber. Die flexible Antriebswelle 10, deren flexible drehsteife Seele 10a von einem ebenfalls flexiblen Hüllrohr 10b ummantelt ist, ist somit entlang des Führungskanals 7 an einer Mehrzahl von Unterstützungsstellen oder -punkten unterstützt, die im Wesentlichen durch die erhabenen Stützstellen 7c, grundsätzlich jedoch von den jeweiligen Stützelementen 7a gebildet sind.

Wie in Fig. 5 veranschaulicht, ist die in dem Führungskanal 7 geführte Antriebswelle 10 im Spindelgetriebe 12 mit einem Schneckenrad 16 verbunden, das mit einer Spindelmutter 17 des Spindelgetriebes 12 kämmt. Eine Drehbewegung der vom Elektromotor 9 angetriebenen Antriebswelle 10 wird in eine entsprechende Drehbewegung der Spindelmutter 17 umgesetzt, die ihrerseits mit der Gewindespindel 11 kämmt.

Im Ausführungsbeispiel ist das Spindelgetriebe 12 mit der jeweiligen Oberschiene 3a fest verbunden, während die Gewindespindel 11 mit der Unterschiene 3b der entsprechenden Schiene 3 fest verbunden wird. Hierzu sind an der Gewindespindel 11 beidendseitig Haltelaschen 18 vorgesehen. Diese sind mit Drehlagern 19 versehen, in denen die Gewindespindel 11 drehbeweglich einliegt.

Mit einer entsprechenden Längsverschiebung des Spindelgetriebes 12 entlang der Gewindespindel 11 wird somit auch die zugeordnete Oberschiene 3a - und ebenso über den Wellenzapfen 13 die Oberschiene 2a der gegenüberliegen Schiene 2 - in x-Richtung verstellt. Dies bewirkt eine entsprechende Verstellbewegung sowohl des mit den Oberschienen 2a, 3a verbundenen Kraftfahrzeugsitzgestells als auch des Halteelementes 4 in Schienenlängsrichtung (x-Richtung).

**Bezugszeichenliste**

| | | | |
|---|---|---|---|
| 1 | Schienenverstellsystem | a | langer Trägerabschnitt |
| 2 | Schiene | b | kurzer Trägerabschnitt |
| 2a | Oberschiene | | |
| 2b | Unterschiene | | |
| 3 | Schiene | | |
| 3a | Oberschiene | | |
| 3b | Unterschiene | | |
| 4 | Halteelement/Trägerteil | | |
| 4a,4b | Haltelasche | | |
| 5 | Stütz-/Gitterstruktur | | |
| 6 | Gittersteg | | |
| 7 | Führungskanal | | |
| 7a | Stützelement | | |
| 7b | Stützlücke | | |
| 7c | Stützstelle | | |
| 7d,e | Seitenwand | | |
| 8 | Ausnehmung | | |
| 9 | Elektromotor | | |
| 10 | flexible Antriebswelle | | |
| 10a | Seele | | |
| 10b | Hüllrohr | | |
| 11 | Gewindespindel | | |
| 12 | Spindelgetriebe | | |
| 13 | Wellenzapfen | | |
| 14 | (erste) Stützreihe | | |
| 15 | (zweite) Stützreihe | | |
| 16 | Schneckenrad | | |
| 17 | Spindelmutter | | |
| 18 | Haltelasche | | |
| 19 | Drehlager | | |

## Patentansprüche

1. Schienenverstellsystem (1) für einen Kraftfahrzeugsitz, mit einem elektromotorischen Spindelantrieb (9) und mit einer flexiblen Antriebswelle (10), die mit einer Gewindespindel (11) zur Längsverstellung eines Schienenpaares koppelbar ist, deren Schienen (2, 3) über ein Halteelement (4) miteinander verbunden sind, wobei das Halteelement (4) einen Führungskanal (7) zur Aufnahme der Antriebswelle (10) aufweist, wobei der Führungskanal (7) durch eine Anzahl von in einer ersten Stützreihe (14) und in einer zweiten beabstandet gegenüberliegenden Stützreihe (15) jeweils in Wellenlängsrichtung alternierend angeordneten Stützelementen (7a) und Stützlücken (7a) gebildet ist, wobei das oder jedes Stützelement (7a) eine gegenüberliegende Stützlücke (7b) zumindest teilweise überspannt
**dadurch gekennzeichnet,**
**dass** an das oder jedes Stützelement (7a) eine lokale Stützstelle (7c) angeformt ist, und dass jeweils zwei Stützstellen (7c) einander schräg gegenüberliegend angeordnet sind.

2. Schienenverstellsystem (1) nach Anspruch 1,
**dadurch gekennzeichnet,**
**dass** die zweite Stützreihe (15) mit zur ersten Stützreihe (14) versetzt angeordneten Stützelementen (7a) und Stützlücken (7b) ausgebildet ist.

3. Schienenverstellsystem (1) nach Anspruch 1 oder 2,
**dadurch gekennzeichnet,**
**dass** der Führungskanal (7) zwischen zwei einander beabstandet gegenüberliegenden Seitenwänden (7d, 7e) des Halteelementes (4) verläuft.

4. Schienenverstellsystem (1) nach einem der Ansprüche 1 bis 3,
**dadurch gekennzeichnet,**
**dass** das Halteelement (4) unter Bildung eines vergleichsweise langen Trägerabschnitts (a) und eines vergleichsweise kurzen Trägerabschnitts (b) eine dezentral angeordnete Ausnehmung (8) zur Lagerung des Spindelantriebs (9) aufweist, wobei sich der Führungskanal (7) entlang des vergleichsweise langen Trägerabschnitts (a) erstreckt.

5. Schienenverstellsystem (1) nach einem der Ansprüche 1 bis 4,
**dadurch gekennzeichnet,**
**dass** das Halteelement (4) eine den Führungskanal (7) beidseitig flankierende rahmenartige Gitterstruktur (5) aufweist.

6. Schienenverstellsystem (1) nach einem der Ansprüche 1 bis 5,
**dadurch gekennzeichnet,**
**dass** das Halteelement (4) über beidendseitige Haltelaschen (4a, 4b) an den einander beabstandet gegenüberliegenden Schienen (2, 3), insbesondere an den Oberschienen (2a, 3a), befestigt ist.

7. Schienenverstellsystem (1) nach einem der Ansprüche 1 bis 6,
**dadurch gekennzeichnet,**
**dass** das Halteelement (4) aus Kunststoff besteht.

## Claims

1. Rail adjustment system (1) for a motor vehicle seat, having an electromotive spindle drive (9) and having a flexible drive shaft (10) which is able to be coupled to a threaded spindle (11) for longitudinal adjustment of a rail pair, the rails (2,3) of which are connected to one another via a retaining element (4), wherein the retaining element (4) has a guide channel (7) to receive the drive shaft (10), wherein the guide channel (7) is formed by a number of support elements (7a) and support holes (7a) arranged alternatingly in the shaft longitudinal direction in a first support row (14) and in a second support row (15) lying opposite at a distance respectively, wherein the or each support element (7a) at least partially spans an opposing support hole (7b),
**characterised in that**
a local support point (7c) is formed on the or each support element (7a); and two support points (7c) are arranged lying opposite each other at an angle respectively.

2. Rail adjustment system (1) according to claim 1,
**characterised in that**
the second support row (15) is formed with support elements (7a) and support holes (7b) which are arranged to be offset with respect to the first support row (14).

3. Rail adjustment system (1) according to claim 1 or 2,
**characterised in that**
the guide channel (7) runs between two side walls (7d, 7e) of the retaining element (4) lying opposite each other at a distance.

4. Rail adjustment system (1) according to one of claims 1 to 3,
**characterised in that**
the retaining element (4) has a recess (8) arranged in a decentralised manner for storing the spindle drive (9), forming a comparably long carrier section (a) and a comparably short carrier section (b), wherein the guide channel (7) extends along the comparably long carrier section (a).

5. Rail adjustment system (1) according to one of claims 1 to 4,
**characterised in that**
the retaining element (4) has a frame-like lattice structure (5) flanking the guide channel (7) on both sides.

6. Rail adjustment system (1) according to one of claims 1 to 5,
**characterised in that**
the retaining element (4) is fastened to the rails (2, 3) lying opposite each other at a distance, in particular to the upper rails (2a, 3a), via retaining plates (4a, 4b) at both ends.

7. Rail adjustment system (1) according to one of claims 1 to 6,
**characterised in that**
the retaining element (4) consists of plastic.

## Revendications

1. Système de réglage à rails (1) pour un siège de véhicule automobile, comprenant un entraînement de vis à moteur électrique (9) et un arbre d'entraînement (10) flexible, qui peut être couplé à une broche filetée ou vis (11) pour le réglage longitudinal d'une paire de rails dont les rails (2, 3) sont reliés mutuellement par l'intermédiaire d'un élément de maintien (4), l'élément de maintien (4) présentant un canal de guidage (7) destiné à accueillir l'arbre d'entraînement (10), le canal de guidage (7) étant formé par un certain nombre d'éléments d'appui (7a) et d'interruptions d'appui (7a), qui sont agencés dans une première rangée d'appui (14) et une deuxième rangée d'appui (15) opposée et à distance de la première rangée, et qui alternent respectivement dans la direction longitudinale d'arbre, et l'élément ou chaque élément d'appui (7a) couvrant au moins partiellement l'étendue d'une interruption d'appui (7b), qui lui est opposée,
**caractérisé**
**en ce que** sur l'élément ou chaque élément d'appui (7a) est formée une zone d'appui localisée (7c), et en ce que les zones d'appui (7c) sont mutuellement opposées deux par deux, respectivement de manière oblique l'une par rapport à l'autre.

2. Système de réglage à rails (1) selon la revendication 1,
**caractérisé**
**en ce que** la deuxième rangée d'appui (15) est réalisée de manière à présenter des éléments d'appui (7a) et des interruptions d'appui (7b) agencés de manière décalée par rapport à ceux de la première rangée d'appui (14).

3. Système de réglage à rails (1) selon la revendication 1 ou la revendication 2,
**caractérisé**
**en ce que** le canal de guidage (7) s'étend entre deux parois latérales (7d, 7e) de l'élément de maintien (4), mutuellement opposées, à distance l'une de l'autre.

4. Système de réglage à rails (1) selon l'une des revendications 1 à 3,
**caractérisé**
**en ce que** l'élément de maintien (4) présente un évidement (8) destiné au logement de l'entraînement de vis (9) et agencé de manière décentrée, en formant un tronçon de traverse de support relativement long (a) et un tronçon de traverse de support relativement court (b), le canal de guidage (7) s'étendant le long du tronçon de traverse de support relativement long (a).

5. Système de réglage à rails (1) selon l'une des revendications 1 à 4,
**caractérisé**
**en ce que** l'élément de maintien (4) présente une structure en treillis (5) à la manière d'un cadre, qui encadre le canal de guidage (7) des deux côtés.

6. Système de réglage à rails (1) selon l'une des revendications 1 à 5,
**caractérisé**
**en ce que** l'élément de maintien (4) est fixé, par l'intermédiaire de pattes de maintien (4a, 4b) situées aux deux extrémités, sur les rails (2, 3) mutuellement opposés à distance l'un de l'autre, notamment sur les rails supérieurs (2a, 3a).

7. Système de réglage à rails (1) selon l'une des revendications 1 à 6,
**caractérisé**
**en ce que** l'élément de maintien (4) est réalisé en matière plastique.
